# FASCICULE DE BREVET EUROPEEN

(11) **EP 3 999 948 B1**
(45) Date de publication et mention de la délivrance du brevet: **30.07.2025**
(21) Numéro de dépôt: 20725715.5
(22) Date de dépôt: 15.05.2020
(51) Int. Cl.: G06F 3/16, G06Q 30/02

(54) **PROCÉDÉ POUR DÉLIVRER UN CONTENU AUDIO PERSONNALISÉ DANS UNE CABINE DE VÉHICULE**
VERFAHREN ZUR BEREITSTELLUNG VON PERSONALISIERTEM AUDIOINHALT IN EINER FAHRZEUGKABINE
METHOD FOR DELIVERING PERSONALISED AUDIO CONTENT IN A VEHICLE CAB

(30) Priorité: 19.07.2019 FR 1908199
(43) Date de publication de la demande: 25.05.2022
(73) Titulaire: Renault s.a.s, 92100 Boulogne Billancourt (FR)
(72) Inventeur: LE-NINDRE, Bénédicte, 78117 Châteaufort (FR); WORMS, Laurent, 78000 Versailles (FR)
(74) Mandataire: Renault Group
(86) Numéro de dépôt international: PCT/EP2020/063678
(87) Numéro de publication internationale: WO 2021/013402

(56) Documents cités:
- US-A1- 2017 255 966
- US-A1- 2017 358 302
- US-A1- 2018 328 755
- US-A9- 2016 210 670

## Description

L'invention concerne le domaine de la personnalisation de l'ambiance dans un véhicule.

L'invention porte sur un procédé pour délivrer un contenu audio personnalisé dans une cabine de véhicule.

Il est connu de l'état de la technique la diffusion de contenus audio dans une cabine de véhicule, en fonction de la localisation du véhicule ou de la destination du véhicule. Par exemple, lorsque le véhicule traverse un lieu géographique, un morceau musical chanté dont les paroles sont en lien avec ledit lieu géographique, est diffusé au sein de la cabine du véhicule. Selon un autre exemple, un chanteur est connu pour son attachement à une région de France. Lorsque le véhicule est à destination cette région de France, une ou plusieurs chansons de ce chanteur, sont diffusées au sein de la cabine du véhicule.

L'art antérieur propose une expérience de diffusion audio en rapport avec le trajet du véhicule, mais ni très personnalisée vis-à-vis des occupants du véhicule, ni suffisamment poreuse vis à vis de l'environnement extérieur, ne la rendant pas unique.

US 2017/255966 A1 divulgue un assistant virtuel qui diffuse des messages personalisés en fonction de la position du véhicule.

Le but de cette invention est de proposer une expérience de diffusion audio dans une cabine véhicule unique, dynamique, contextuelle et poreuse vis à vis de l'environnement extérieur.

L'invention porte sur un procédé pour délivrer un contenu audio personnalisé dans une cabine de véhicule à un passager, le véhicule comprenant un calculateur, le procédé comprenant les étapes suivantes :
- une étape de configuration, dans laquelle le calculateur envoie à un module d'intelligence artificielle des paramètres de configuration, les paramètres de configuration comprenant des données véhicule, des données passager et des données contextuelles,
- une étape de traitement, dans laquelle le module d'intelligence artificielle envoie à un compilateur une requête de contenu audio personnalisé sur la base d'au moins un paramètre de configuration, la requête de contenu audio personnalisé comprenant au moins une catégorie de contenu audio,
- une étape de génération d'un contenu audio, dans laquelle le compilateur interroge un fournisseur de contenus audio pour récupérer un contenu audio permettant de générer un contenu audio personnalisé en accord avec la requête de contenu audio personnalisé,
- une étape de délivrance d'un contenu audio, dans laquelle le compilateur envoie le contenu audio personnalisé au calculateur pour une diffusion dudit contenu audio personnalisé au sein de la cabine du véhicule.

Selon un aspect de l'invention, les données contextuelles comprennent des points d'intérêt géographiques, le module d'intelligence artificielle étant apte à interroger un serveur d'un point d'intérêt afin de récupérer une information sur le point d'intérêt, pour générer la requête de contenu audio personnalisé, en relation avec ladite information sur le point d'intérêt.

Selon un aspect de l'invention, les données contextuelles comprennent des points d'intérêt géographiques, le compilateur étant apte à mixer un extrait d'un contenu audio évocateur d'un point d'intérêt, ou à mixer ledit contenu audio dans son entièreté, avec un autre contenu audio, pour générer un contenu audio dit de type augmenté, en vue de l'envoyer en tant que contenu audio personnalisé au calculateur.

Selon un aspect de l'invention, le module d'intelligence artificielle comprend des paramètres identitaires à une marque, un produit ou une société, le module d'intelligence artificielle étant apte à générer la requête de contenu audio personnalisé, en phase avec une identité de la marque, du produit ou de la société, en fonction des paramètres identitaires.

Selon un aspect de l'invention, le procédé comprend en outre une étape de réception de demande de diffusion spécifique, dans laquelle le module d'intelligence artificielle reçoit une demande de diffusion d'un contenu audio spécifique, procédé selon lequel dans l'étape de traitement, le module d'intelligence artificielle envoie au compilateur la requête de contenu audio personnalisé, en fonction en outre de la demande de diffusion spécifique.

Selon un aspect de l'invention, le compilateur est apte à interroger un ou plusieurs fournisseurs de contenus audio pour récupérer plusieurs contenus audio, le compilateur étant apte à générer le contenu audio personnalisé en mixant ou concaténant plusieurs contenus audio.

Selon un aspect de l'invention, le compilateur est apte à générer une succession de contenus audio personnalisés en accord avec la requête de contenu audio personnalisé, à partir d'une pluralité de contenus audio générés en particulier selon une méthode de recherche des plus proches voisins, jusqu'à réception d'une nouvelle requête de contenu audio personnalisé.

Selon un aspect de l'invention, le calculateur est apte à analyser le contenu audio personnalisé pour générer des paramètres de diffusion, les paramètres de diffusion comprenant un ou plusieurs parmi en outre une correction du timbre audio, une spatialisation sonore, une compression dynamique audio, la diffusion du contenu audio personnalisé au sein de la cabine du véhicule étant effectuée en fonction desdits paramètres de diffusion.

L'invention porte également sur un produit programme d'ordinateur comprenant les instructions de programme mettant en œuvre les étapes du procédé de diffusion d'information personnalisée, lorsque les instructions de programme sont exécutées par un ordinateur.

L'invention porte également sur un support lisible d'informations sur lequel est mémorisé le produit programme d'ordinateur.

L'invention porte également sur un système pour délivrer un contenu audio personnalisé dans une cabine de véhicule, à un passager comprenant :
- un véhicule comprenant une cabine et un calculateur apte à envoyer des paramètres de configuration comprenant des données véhicule, des données passager et des données contextuelles, et apte à recevoir un contenu audio personnalisé pour une diffusion dudit contenu audio personnalisé au sein de la cabine du véhicule,
- un module d'intelligence artificielle apte à recevoir les paramètres de configuration et à envoyer une requête de contenu audio personnalisé sur la base d'au moins un paramètre de configuration, la requête de contenu audio personnalisé comprenant au moins une catégorie de contenu audio,
- un compilateur apte à recevoir la requête de contenu audio personnalisé et à interroger un fournisseur de contenus audio pour récupérer un contenu audio permettant de générer le contenu audio personnalisé en accord avec la requête de contenu audio personnalisé, le compilateur étant en outre apte à envoyer le contenu audio personnalisé (29) au calculateur.

D'autres avantages et caractéristiques de l'invention apparaîtront à la lecture de la description et des dessins.
La figure 1 représente un système permettant la mise en œuvre d'un procédé pour délivrer un contenu audio personnalisé selon l'invention.
La figure 2 illustre les étapes d'un procédé pour délivrer un contenu audio personnalisé selon l'invention.

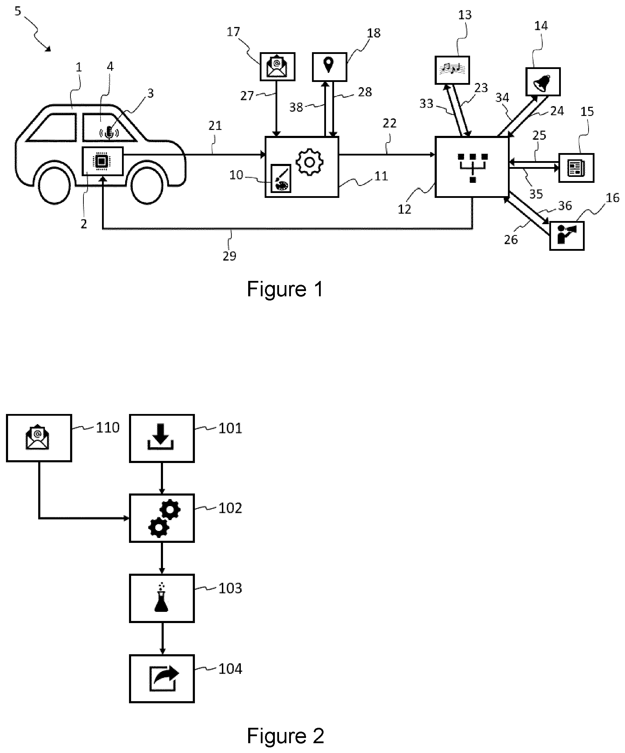

La figure 1 représente un exemple de réalisation d'un système 5 apte à exécuter les étapes du procédé de l'invention, pour délivrer un contenu audio personnalisé dans une cabine de véhicule à un passager. Un passager est une personne localisée dans la cabine. Le conducteur du véhicule est un passager au sens de l'invention. La cabine est aussi appelée couramment l'habitacle du véhicule.

Le système 5 comprend une pluralité de dispositifs : un véhicule 1, un module d'intelligence artificielle 11, un compilateur 12, des fournisseurs de contenus audio 13, 14, 15, 16, un serveur 18 de point d'intérêt géographique, une unité électronique connectée17.

Le véhicule 1 comprend une cabine 4 apte à transporter des passagers. Le véhicule 1 comprend un calculateur 2 et un haut-parleur 3 pour diffuser des contenus audio au sein de la cabine 4. Un véhicule 1 comprend généralement au moins deux haut-parleurs 3.

Le calculateur 2 est apte à envoyer des données de configuration 21 au module d'intellige artificielle 11 et à recevoir un contenu audio personnalisé 29 pour une diffusion au sein de la cabine 4.

Avantageusement, la diffusion de contenus audio personnalisés 29 peut être désactivée par un utilisateur du véhicule par exemple via une interface homme machine. Dans ce cas, le calculateur 2 n'envoie plus de données de configuration 21 au module d'intellige artificielle 11.

Un contenu audio personnalisé 29 peut comprendre des métadonnées que le calculateur 2 est apte à décoder et analyser.

Le module d'intelligence artificielle 11 est apte à recevoir les données de configuration 21 en provenance du calculateur 2 du véhicule 1, pour générer une requête de contenu audio personnalisé 22.

De manière optionnelle, le module d'intelligence artificielle 11 comprend des paramètres identitaires 10 à une marque, un produit ou une société.

De manière encore optionnelle, le module d'intelligence artificielle 11 est apte à interroger via une requête d'information 38, un serveur 18 d'un point d'intérêt géographique, par exemple un serveur d'une salle de spectacle, pour récupérer une information 28 en lien avec ledit point d'intérêt, par exemple le titre de la représentation la plus populaire de la programmation de l'année en cours, dans ladite salle de spectacle.

Dans le cas optionnel où le système 5 comprend une fonction dédicace, le module d'intelligence artificielle 11 est apte à recevoir d'une unité électronique connectée 17, une demande de diffusion d'un contenu audio spécifique 27. Le terme « connecté » s'entendant au sens de « apte à être relié à internet ». Une unité électronique connectée 17 est par exemple un ordinateur ou un dispositif mobile multifonction, tel qu'un téléphone intelligent. Une demande de diffusion d'un contenu audio spécifique 27 comprend par exemple un titre de chanson et/ou un identifiant unique associé à un contenu audio spécifique.

En fonction d'une ou plusieurs données de configuration 21, et optionnellement d'une demande de diffusion d'un contenu audio spécifique 27, d'une information 28 liée à un point d'intérêt et/ou de paramètres identitaires 10, le module d'intelligence artificielle 11 est apte à générer une requête de contenu audio personnalisé 22.

Le module d'intelligence artificielle 11 peut être intégré au véhicule 1 ou bien être déporté. De préférence, le module d'intelligence artificielle 11 est déporté.

Le compilateur 12 est apte à recevoir une requête de contenu audio personnalisé 22 et à générer, en fonction de cette requête de contenu audio personnalisé 22, un contenu audio personnalisé 29.

Le compilateur 12 peut être intégré au véhicule 1 ou bien être déporté. De préférence, le compilateur 12 est déporté.

Le compilateur 12 est apte à interroger un ou plusieurs fournisseurs de contenus audio 13, 14, 15, 16, via des requêtes de contenus audio 33, 34, 35, 36, pour récupérer un ou plusieurs contenus audio 23, 24, 25, 26. Le compilateur 12 est alors apte à générer un contenu audio personnalisé 29 par un simple transfert d'un contenu audio 23, 24, 25, 26 récupéré depuis un fournisseur de contenus audio 13, 14, 15, 16, ou bien en mixant ou concaténant plusieurs contenus audio 23, 24, 25, 26 récupérés depuis un ou plusieurs fournisseurs de contenus audio 13, 14, 15, 16.

Un contenu audio 23, 24, 25, 26 est classifié selon différentes catégories comprenant les catégories musique, information, livre audio, sketch, ambiance, dédicace.

Sur la figure 1, les fournisseurs de contenus audio représentés sont :
- un fournisseur de contenus audio musicaux 13, apte à fournir des contenus audio de catégorie musique tels que des chansons, des morceaux instrumentaux,
- un fournisseur de contenus audio de sons d'ambiance 14, apte à fournir des contenus audio de catégorie ambiance tels que des sons de cloche, des cris d'enfants, des sons évoquant une salle de spectacle.
- un fournisseur de contenus audio informatifs 15, apte à fournir des contenus audio de catégorie information tels que des articles, des éditoriaux, des entretiens, des supports de formation,
- un fournisseur de contenus audio de dédicaces 16, apte à fournir des contenus audio de catégorie dédicace, en particuliers des messages vocaux ou musicaux enregistrés par des personnes ou dispositifs à l'initiative de demandes de diffusion d'un contenu audio spécifique 27.

On distingue également, d'autres fournisseurs de contenus audio, non représentés sur la figure 1, tels que:
- un fournisseur de contenus audio de sketchs apte à fournir des contenus audio de catégorie sketch tels que des répliques cultes de cinéma, de théâtre, des extraits de spectacles humoristiques ou dramatiques,
- un fournisseur de contenus audio de livres audio apte à fournir des contenus audio de catégorie livre audio tels que des enregistrements d'oeuvres publiées au préalable sous forme écrite, et lues à une ou plusieurs voix par un ou plusieurs comédiens professionnels, par l'auteur de l'oeuvre, ou de manière moins préférentielle par un synthétiseur vocal.

Plusieurs fournisseurs de contenus audio 13, 14, 15, 16 peuvent être regroupés en un seul fournisseur de contenus audio multi-catégorie apte à fournir des contenus audio 23, 24, 25, 26 de différentes catégories.

A une catégorie de contenu audio, sont associées une ou plusieurs caractéristiques permettant de caractériser plus précisément un contenu audio 23, 24, 25, 26.

On distingue pour la catégorie musique une pluralité de caractéristiques associées comprenant :
- un genre parmi en outre jazz, rock, classique, pop, variété, rap, disco, métal
- un interprète ou un groupe d'interprètes,
- un titre de chanson ou d'album,
- des descripteurs musicaux tels qu'un niveau énergétique, un indice d'instrumentalité, un mode musical, un indice de popularité, un tempo, un indice de positivité, une teneur acoustique, un indice de parlé-chanté, un indice de volume sonore, un indice de caractère dansant.

On distingue pour la catégorie information une pluralité de caractéristiques associées comprenant :
- une thématique parmi en outre sport, musique, information internationale, culture,
- des descripteurs tels qu'un indice de popularité, un indice de positivité.

On distingue pour la catégorie livre audio une pluralité de caractéristiques associées comprenant :
- un genre parmi en outre théâtre, roman, policier, suspense,
- un auteur,
- un titre de livre
- des descripteurs tels qu'un niveau énergétique, un indice de popularité, un indice de positivité.

On distingue pour la catégorie sketch une pluralité de caractéristiques associées comprenant :
- un type parmi en outre théâtre, cinéma, spectacle
- le genre parmi en outre comédie, comédie dramatique, drame, horreur, enfance, policier
- un réalisateur,
- un acteur ou un groupe d'acteurs
- un titre de film
- des descripteurs tels qu'un niveau énergétique, un indice de popularité, un indice de positivité, un indice parlé/chanté.

On distingue pour la catégorie ambiance une pluralité de caractéristiques associées comprenant :
- un type de point d'intérêt géographique dont des exemples sont donnés ci-après,
- des descripteurs tels qu'un niveau énergétique, une popularité.

Les descripteurs permettent de définir un contenu audio par des caractéristiques spécifiques. La liste donnée ci-dessus n'est pas limitative.

Concernant les descripteurs musicaux, des définitions sont données ci-dessous.

Le niveau énergétique représente une mesure perceptuelle de l'intensité et de l'activité. Un contenu audio énergétique est généralement bruyant. Par exemple, la musique de genre métal a un fort niveau énergétique. Un prélude de musique de genre classique a un faible niveau énergétique.

L'indice d'instrumentalité représente une teneur en instrumental par rapport au vocal dans un contenu audio. La musique de genre rap a un faible indice d'instrumentalité. Une musique instrumentale ni chantée ni parlée, a un indice d'instrumentalité maximum.

Le mode musical indique si le contenu audio est de mode majeur ou mineur, selon la définition donnée en théorie musicale.

La popularité représente principalement le nombre de diffusions d'un contenu audio et peut aussi corréler ce nombre en fonction des dates de ces diffusions.

Le tempo représente la vitesse ou le rythme d'un contenu audio.

L'indice de positivité représente la positivité musicale transmise par un contenu audio. Un fort indice de positivité correspond à un contenu audio gai, joyeux, euphorique tandis qu'un faible indice de positivité correspond à un contenu audio triste, déprimant, inspirant ou exprimant la colère.

La teneur acoustique indique si un contenu audio est composé d'instruments acoustiques ou non.

L'indice de parlé-chanté indique la présence de mots parlés par rapport aux mots chantés dans un contenu audio. Un contenu audio de catégorie musique de genre rap a un plus fort indice de parlé-chanté qu'un contenu audio de catégorie musique de genre disco.

L'indice de volume sonore représente une valeur moyenne de volume sur tout le contenu audio.

L'indice de caractère dansant représente à quel point un contenu audio convient à la danse en combinant en outre le tempo, la stabilité du rythme et la régularité générale.

Les descripteurs des contenus audio des autres catégories renvoient à des représentations ou indications similaires, transposées pour les catégories correspondantes.

On distingue pour la catégorie dédicace au moins une caractéristique associée tel qu'un identifiant unique associé à un contenu audio spécifique.

Une requête de contenu audio personnalisé 22 comprend une pluralité de champs.

Avantageusement la pluralité de champs comprend une catégorie de contenu audio, au moins une caractéristique associée, et optionnellement une durée.

Par exemple, dans le cas d'un contenu audio de catégorie information ou sketch, il est avantageux d'indiquer la durée souhaitée du contenu audio pour que la durée de la diffusion du contenu audio personnalisé 29 soit en phase avec la situation contextuelle dont les données de configuration 21 sont le reflet, telle qu'un embouteillage.

Une requête de contenu audio personnalisé 22 peut comprendre plusieurs catégories de contenus audio, chaque catégorie étant associée à au moins une caractéristique.

Les différents champs de la requête de contenu audio personnalisé 22 caractérise ainsi finement le contenu audio personnalisé 29 à diffuser dans la cabine 2 du véhicule 1.

Le module d'intelligence artificielle 11 génère la requête de contenu audio personnalisé 22, en fonction des paramètres de configuration 21 envoyés par le calculateur 2.

Les paramètres de configuration 21 comprennent :
- des données contextuelles comprenant un point d'intérêt géographique, la météo, le trafic routier, le paysage, le moment de la journée,
- des données passager comprenant des préférences utilisateur, l'état du conducteur, l'humeur du conducteur, l'âge et le genre (masculin/féminin) d'un passager, les goûts des passagers,
- des données véhicule comprenant la vitesse du véhicule.

Les données contextuelles comprennent des données environnementales, des données temporelles. Elles sont extrinsèques au véhicule 1.

Les données passager sont en lien direct avec le ou les passagers du véhicule. Les données passager reflètent des états émotionnels du ou des passagers. Les données passagers comprennent des données personnelles telles que l'âge et le genre (masculin/féminin) d'un passager. Les données passagers comprennent aussi, via les préférences utilisateur, des préférences choisies par un utilisateur qui orientent le choix des contenus audio personnalisés 29 en prohibant certains contenus audio. Les goûts des passagers reflètent les préférences audio de tous les passagers du véhicule. Cela permet au module d'intelligence artificielle 11 de générer des requêtes de contenu personnalisé 22 en phase avec les goûts de tous les utilisateurs du véhicule 1, les contenus audio personnalisés 29 étant diffusés dans la cabine 4 du véhicule où sont localisés tous les passagers. Dans un mode de réalisation de diffusion dans des bulles sonores au sein de la cabine 4 du véhicule, le système 5 peur générer autant de contenus audio personnalisés 29 que de passagers, en fonction des goûts de chaque passager, la diffusion de chaque contenu audio personnalisé 29 étant individualisée.

Les données véhicule sont intrinsèques au véhicule telles que des données circulant sur le bus CAN du véhicule. Ce sont des données issues de capteurs intégrés au véhicule.

On distingue pour la météo une pluralité de types parmi en outre orage, pluie, soleil.

On distingue pour le trafic routier une pluralité de types parmi en outre fluide, ralenti et saturé. Le type saturé correspond à un arrêt complet de la circulation.

On distingue pour le paysage une pluralité de types parmi en outre urbain, campagne, forêt, et verdure, le type verdure étant relatif à un taux de couleur verte dans une image d'un environnement véhicule prise par une caméra intégrée au véhicule 1.

On distingue pour le moment de la journée une pluralité de types parmi en outre matin, soir, mi-journée, après-midi, lever du soleil, coucher du soleil, jour, nuit.

On distingue pour l'état du conducteur une pluralité de types parmi en outre fatigue, énervé, stressé.

On distingue pour l'humeur du conducteur une pluralité de types parmi en outre joyeux, triste.

On distingue pour la vitesse du véhicule une pluralité de types parmi rapide, lent, survitesse. Le type survitesse correspond à une vitesse véhicule supérieure à la vitesse maximale autorisée par la législation.

Les préférences utilisateur permettent à un passager de définir des préférences sur une ou plusieurs catégories de contenus audio et sur le mixage des contenus audio 23, 24, 25, 26 entre eux. Par exemple, un passager peut définir une préférence pour la catégorie musique et le genre jazz et prohiber les contenus audio de catégorie information 25 ainsi que le mixage avec des contenus audio de catégorie ambiance 24.

Les préférences utilisateur permettent également à un passager d'inhiber la prise en compte de certains paramètres de configuration 21 par le module d'intelligence artificielle 11 ou d'inhiber la fonction dédicace par exemple en fonction de la personne ou du dispositif qui est à l'initiative d'une demande de diffusion d'un contenu audio spécifique 27.

Le module d'intelligence artificielle 11 génère la requête de contenu audio personnalisé 22, en fonction des paramètres de configuration 21 envoyés par le calculateur 2 du véhicule. En accord avec la requête de contenu audio personnalisé 22, le compilateur 12 génère un contenu audio personnalisé 29 et l'envoie au calculateur 2 du véhicule 1 pour une diffusion au sein de la cabine 4 du véhicule 1. Ainsi, des contenus audio personnalisés et contextuels sont diffusés aux passagers du véhicule 1, en harmonie avec l'environnement extérieur et les passagers.

Les exemples ci-dessous, non limitatifs, illustrent l'influence des paramètres de configuration 21 sur une requête de contenu audio personnalisé 22 comprenant la catégorie musique.

Avantageusement, une donnée contextuelle de météo influe sur les descripteurs musicaux de niveau énergétique, d'indice de caractère dansant, d'indice de positivité, de mode musical, d'indice de volume sonore, permettant ainsi une diffusion de contenu audio personnalisé 29 d'une couleur musicale en harmonie avec la couleur du ciel. A une météo de type soleil correspond un fort indice de positivité, un mode majeur, un fort indice de caractère dansant et un fort indice de niveau énergétique. A une météo de type pluie correspond un faible indice de positivité, un mode mineur, un faible indice de caractère dansant et un faible indice de niveau énergétique. Dans le cas d'une donnée contextuelle de météo de type orage, on augmente l'indice de volume sonore.

Avantageusement, une donnée contextuelle de moment de la journée influe sur le descripteur musical de teneur acoustique, d'indice de positivité, de mode musical et de niveau énergétique. Pour un moment de journée de type lever du soleil, le contenu audio personnalisé 29 généré est avantageusement de plus en plus énergétique et positif au fur et à mesure que la luminosité augmente, et plutôt en mode majeur. Pour un moment de journée de type coucher du soleil, le contenu audio personnalisé 29 généré est avantageusement de moins en moins énergétique et positif au fur et à mesure que la luminosité diminue et plutôt en mode mineur.

Avantageusement, une donnée contextuelle de paysage influe sur les descripteurs musicaux de teneur acoustique, de tempo et d'indice d'instrumentalité, permettant de générer des contenus audio personnalisés 29 plutôt acoustiques et instrumentaux et de tempo lent, pour un paysage de type verdure, les descripteurs musicaux pouvant être ajustés au fur et à mesure de la variation du taux de couleur verte dans l'image de l'environnement véhicule prise par la caméra intégrée au véhicule 1. Il est également pertinent de changer le genre d'un contenu audio de type musique lors d'un changement franc de paysage.

Avantageusement, une donnée véhicule de vitesse influe sur les descripteurs musicaux de niveau énergétique et de tempo. Pour une vitesse de type rapide, le contenu audio personnalisé 29 généré est avantageusement énergétique et de tempo rapide. Pour une vitesse de type lent, le contenu audio personnalisé 29 généré est avantageusement peu énergétique et de tempo lent.

Avantageusement, une donnée passager d'humeur du conducteur influe sur le descripteur musical d'indice de positivité. Selon les préférences utilisateur, un contenu audio personnalisé 29 joyeux ou triste peut être en phase avec une donnée passager d'humeur de type triste. Un passager triste peut souhaiter entendre des contenus audio en phase avec son état ou bien au contraire des contenus audio joyeux pour l'aider à retrouver un état joyeux. Pour une donnée passager d'humeur de type joyeux, c'est plutôt un contenu audio joyeux qui correspond.

Avantageusement, le module d'intelligence artificielle 11 priorise les données de configuration 21 lorsqu'elles conduisent à une incompatibilité de choix des champs de la requête de contenu personnalisé 22.

Il est également envisageable d'associer à une combinaison de données de configuration 21 des règles d'impact sur les descripteurs. Par exemple, les données contextuelles de météo et les données passager d'humeur du conducteur peuvent être avantageusement combinées.

Selon un exemple non limitatif, une requête de contenu audio personnalisé 22 comprend la catégorie information lorsque les données de configuration 21 comprennent des données contextuelles comprenant un moment de la journée de type matin, mi-journée ou soir. Sur les plages horaires typiques de 7h à 9h, de 12h à 13h et de 19h à 20h30, il est pertinent de diffuser des contenus audio personnalisés 29 tels que des éditoriaux en relation avec l'actualité.

Lorsque les différents dispositifs du système 5 ne sont pas hébergés proches les uns des autres, en particulier lorsqu'ils ne sont pas intégrés au véhicule 1 de manière à ce qu'il soit possible de les connecter les uns aux autres au moyen d'une liaison filaire, la communication par échanges de données est réalisée par une liaison sans fil connue de l'état de l'art, tel qu'un réseau cellulaire 3G, 4G ou 5G. Par exemple, une technologie hertzienne telle que proposée par le standard de communication WiMAX (acronyme anglais pour Worldwide Interoperability for Microwave Access) est appropriée pour la communication entre les fournisseurs de contenus audio 13, 14, 15, 16 et le compilateur 12.

La figure 2 illustre les étapes d'un procédé pour délivrer un contenu audio personnalisé selon l'invention.

Selon une étape de configuration 101, le calculateur 2 envoie au module d'intelligence artificielle 11 des paramètres de configuration 21 qui comprennent des données véhicule, des données passager et des données contextuelles.

Selon une étape de traitement 102, le module d'intelligence artificielle 11 envoie au compilateur 12 une requête de contenu audio personnalisé 22 sur la base d'au moins un paramètre de configuration 21. La requête de contenu audio personnalisé 22 comprend au moins une catégorie de contenu audio.

Selon une étape de génération d'un contenu audio 103, le compilateur 12 interroge un fournisseur de contenus audio 13, 14, 15, 16 pour récupérer un contenu audio 23, 24, 25, 26 permettant de générer un contenu audio personnalisé 29 correspondant à la requête de contenu audio personnalisé 22.

Avantageusement, un fournisseur de contenus audio 23, 24, 25, 26 est apte à recevoir des requêtes de contenus audio 33, 34, 35, 36 comprenant les caractéristiques associées à sa catégorie, en particulier les descripteurs.

Selon une étape de délivrance d'un contenu audio 104, le compilateur 12 envoie le contenu audio personnalisé 29 au calculateur 2 pour une diffusion au sein de la cabine 4 du véhicule 1.

Selon une fonction dédicace, le procédé comprend en outre une étape de réception de demande de diffusion spécifique 110, dans laquelle le module d'intelligence artificielle 11 reçoit une demande de diffusion d'un contenu audio spécifique 27.

Cette fonction dédicace permet à une personne ou un dispositif d'envoyer une demande de contenu audio spécifique 27 au système 5 pour une diffusion dudit contenu audio spécifique au sein de la cabine 4 du véhicule 1.

De manière préférentielle, la demande de contenu audio spécifique 27 est envoyée directement au module d'intelligence artificielle 11, mais il est envisageable que la demande de contenu audio spécifique 27 soit envoyée au calculateur 2 du véhicule 1 qui la retransmet ensuite au module d'intelligence artificielle 11

Par exemple, une personne souhaite envoyer une chanson dédicacée à un utilisateur du véhicule 1, à l'occasion de son anniversaire. La personne se connecte, via son téléphone intelligent qui est une unité électronique connectée 17, à une application dédiée à la fonction dédicace, enregistre via son téléphone un message personnalisé et choisit auprès du fournisseur de contenus audio musicaux 13 une chanson pour accompagner le message personnalisé. La personne valide le choix de la chanson et du message personnalisé sur l'application dédiée. Le message personnalisé est envoyé au fournisseur de contenus de dédicaces qui le stocke, lui attribue un identifiant unique et envoie cet identifiant unique au téléphone.

Une demande de diffusion d'un contenu audio spécifique 27 est envoyée au module d'intelligence artificielle 11 qui la reçoit selon une étape de réception de demande de diffusion spécifique 110.

La demande de diffusion d'un contenu audio spécifique 27 comprend le titre et l'interprète de la chanson choisie, ainsi que l'identifiant unique correspondant au message personnalisé.

Si l'utilisateur du véhicule 1 est passager du véhicule 1, par exemple parce qu'il est en train de conduire ledit véhicule 1, le module d'intelligence artificielle 11 envoie au compilateur 12 sur la base d'au moins un paramètre de configuration 21, par exemple les données passager de préférences utilisateur qui autorise la fonction dédicace, une requête de contenu audio personnalisé 22, selon l'étape de traitement 102. La requête de contenu audio personnalisé 22, pour refléter la demande de diffusion d'un contenu audio spécifique 27, comprend des champs qui sont :
- la catégorie dédicace et la caractéristique associée d'identifiant unique,
- la catégorie musique et les caractéristiques associées de titre et d'interprète de la chanson.

Selon l'étape de génération d'un contenu audio 103, le compilateur 12 interroge le fournisseur de contenus de dédicaces 16 pour récupérer, en fonction de l'identifiant unique, le message personnalisé. Le compilateur 12 interroge le fournisseur de contenus audio musicaux 13 pour récupérer la chanson associée au message personnalisé. Le compilateur 12 concatène le message personnalisé et la chanson pour générer un contenu audio personnalisé 29.

Le compilateur 12 envoie ensuite le contenu audio personnalisé 29 au calculateur 2 pour une diffusion au sein de la cabine 4 du véhicule 1, selon l'étape de délivrance d'un contenu audio 104.

La génération de la requête de contenu audio personnalisé 22 peut être temporisée par rapport à la réception de la demande de diffusion d'un contenu audio spécifique 27, si l'utilisateur du véhicule 1 n'est pas un passager du véhicule 1 au moment de ladite réception de la demande de diffusion d'un contenu audio spécifique 27, ou en fonction des paramètres de configuration 21 ou encore selon le contenu de la demande de diffusion d'un contenu audio spécifique 27.

Par exemple, la demande de diffusion d'un contenu audio spécifique 27 peut également comporter un horaire de diffusion choisi par la personne ou le dispositif à l'initiative de ladite demande de diffusion d'un contenu audio spécifique 27. Un tel choix d'horaire de diffusion est fait par exemple via l'application dédiée à la fonction dédicace au moment de la validation du contenu audio spécifique 27. Le contenu audio spécifique 27 sera alors diffusé à l'horaire spécifié, sous réserve que l'utilisateur de véhicule 1 soit passager du véhicule 1 à l'horaire spécifié.

Selon un autre exemple, la demande de diffusion d'un contenu audio spécifique 27 peut en outre comporter une position géographique du véhicule 1 pour la diffusion, choisi par la personne ou le dispositif à l'initiative de ladite demande de diffusion d'un contenu audio spécifique 27. Un tel choix de position géographique est fait par exemple via l'application dédiée à la fonction dédicace au moment de la validation du contenu audio spécifique 27. Le contenu audio spécifique 27 sera alors diffusé lorsque le véhicule 1 sera localisé en la position géographique spécifiée.

Avantageusement, les paramètres de configuration 21 comprennent des données contextuelles comprenant un point d'intérêt géographique.

Un point d'intérêt géographique est détecté par le véhicule 1 par sa position géographique, par exemple à l'aide de données extraites d'une carte numérique accessible par le calculateur 2, ou par une caméra intégrée au véhicule 1.

Un point d'intérêt est classé par type. On distingue plusieurs types parmi en outre notamment une école, une église, un musée, une salle de spectacle, un monument historique, un hôtel, un château, un stade de sport, un gymnase, un théâtre, une mairie, une école de musique ou de danse, un opéra, un parc, une forêt, une rivière, un fleuve, un cours d'eau, un océan, une mer, un port, une infrastructure routière telle qu'un tunnel, un pont, un carrefour, un radar, une route emblématique...

Le compilateur 12 est apte à mixer un extrait d'un contenu audio, typiquement d'une catégorie ambiance ou de manière plus générale d'une catégorie quelconque, évocateur d'un point d'intérêt, ou à mixer ledit contenu audio dans son entièreté, avec un autre contenu audio, d'une catégorie différente ou de la même catégorie, pour générer un contenu audio dit de type augmenté, en vue de l'envoyer en tant que contenu audio personnalisé 29 au calculateur 2, selon une première variante de réalisation.

Le compilateur 12 est également apte à envoyer un extrait d'un contenu audio typiquement d'une catégorie ambiance ou de manière plus générale d'une catégorie quelconque, évocateur d'un point d'intérêt, ou à envoyer ledit contenu audio dans son entièreté, directement en tant que contenu audio personnalisé 29 au calculateur 2, sans le mixer à un autre contenu audio, selon une deuxième variante de réalisation.

Le choix d'envoyer un contenu audio personnalisé 29 généré selon la première variante ou selon la deuxième variante est de préférence laissé au compilateur 12. Il est cependant possible de laisser ce choix au module d'intelligence artificielle 11 qui le transmet au compilateur 12 via la requête de contenu audio personnalisé 22, au travers un champ dédié. Le choix de variante de réalisation est déterminé notamment en fonction des données passager et plus particulièrement des préférences utilisateur, mais aussi d'un historique des contenus audio personnalisés déjà diffusés au sein de la cabine 4 du véhicule 1.

Le module d'intelligence artificielle 11 peut également ne pas tenir compte d'une donnée contextuelle de point d'intérêt géographique, en fonction des données passager, d'autres données contextuelles ou des données véhicule. Par exemple, un passager peut, au travers des préférences utilisateur, indiquer qu'il ne souhaite pas que soient diffusés des contenus audio personnalisés 29 tenant compte des points d'intérêt. Selon un autre exemple, dans le cas où un des paramètres de configuration 21 est considéré comme plus prioritaire que le point d'intérêt, le module d'intelligence artificielle 11 génère la requête de contenu audio personnalisé 22 sur la base dudit paramètre de configuration 21 plus prioritaire que le point d'intérêt.

Selon un premier mode de réalisation, après réception de données contextuelles comprenant un point d'intérêt géographique, le module d'intelligence artificielle 11 génère une requête de contenu audio personnalisé 22 comprenant au moins une catégorie de contenu audio et le type du point d'intérêt. Dans l'étape de génération d'un contenu audio 103, le compilateur 12 interroge un fournisseur de contenus audio 13, 14, 15, 16 de la catégorie correspondant à la requête de contenu audio personnalisé 22, pour récupérer un contenu audio 23, 24, 25, 26 de ladite catégorie, évocateur du point d'intérêt. Ensuite, selon la variante de réalisation, le contenu audio récupéré 23, 24, 25, 26 est mixé ou non à un autre contenu audio par le compilateur 12 pour générer un contenu audio personnalisé 29.

Selon un deuxième mode de réalisation, après réception de données contextuelles comprenant un point d'intérêt, le module d'intelligence artificielle 11 interroge un serveur 18 dudit point d'intérêt afin de récupérer une information 28 sur ledit point d'intérêt, afin de générer une requête de contenu audio personnalisé 22 basée sur ladite information 28. La requête de contenu audio personnalisé 22 est ensuite envoyée au compilateur 12 qui en fonction du contenu de la requête de contenu audio personnalisé 22 interroge un fournisseur de contenus audio pour récupérer un contenu audio 23, 24, 25, 26 en phase avec ladite requête de contenu audio personnalisé 22. Ensuite, selon la variante de réalisation, le contenu audio récupéré 23, 24, 25, 26 est mixé ou non à un autre contenu audio par le compilateur 12 pour générer un contenu audio personnalisé 29.

L'étape de traitement 102 selon le deuxième mode de réalisation diffère du premier mode de réalisation en ce que le module d'intelligence artificielle 11 interroge un serveur 18 du point d'intérêt afin de récupérer une information 28 sur le point d'intérêt, pour générer une requête de contenu audio personnalisé 22, en relation avec ladite information 28 sur le point d'intérêt.

Selon un exemple et conformément au premier mode de réalisation, lorsque le véhicule 1 approche d'une école, le calculateur 2 envoie des paramètres de configuration 21 au module d'intelligence artificielle 11, selon l'étape de configuration 101. Les paramètres de configuration 21 comprennent des données contextuelles comportant un point d'intérêt géographique du type école.

Le module d'intelligence artificielle 11 génère une requête de contenu audio personnalisé 22 comprenant la catégorie ambiance et le type école, selon l'étape de traitement 102.

Selon l'étape de génération d'un contenu audio 103, le compilateur 12 interroge un fournisseur de contenus de sons d'ambiance 14 pour récupérer un contenu audio de catégorie ambiance 24, évocateur d'une école, par exemple des cris et rires d'enfants.

Selon la première variante, le contenu audio de catégorie ambiance 24 est mixé à un contenu audio, par exemple le contenu audio personnalisé répondant à la requête de contenu audio personnalisé précédente, et qui est par exemple un contenu audio de catégorie musique, générant ainsi un contenu audio personnalisé 29 de type augmenté, répondant à la dernière requête de contenu audio personnalisé 22. Selon l'étape de délivrance d'un contenu audio 104, le compilateur 12 envoie le contenu audio personnalisé 29 de type augmenté au calculateur 2 pour une diffusion au sein de la cabine 4 du véhicule 1. Le conducteur du véhicule 1, lors de la diffusion du contenu audio personnalisé 29 de type augmenté, perçoit qu'il passe à proximité d'une école. Le conducteur est alors en totale immersion avec l'environnement du véhicule 1. De surcroit, le conducteur est prévenu de manière subtile d'un potentiel danger lié à la possible présence d'enfants dans l'environnement proche du véhicule 1.

Selon la deuxième variante, le contenu audio de la catégorie ambiance 24 est directement envoyé en tant que contenu audio personnalisé 29 au calculateur 2, sans mixage avec un autre contenu audio, selon l'étape de délivrance d'un contenu audio 104.

Selon un autre exemple et conformément au deuxième mode de réalisation, le véhicule 1 approche d'une salle de spectacle. Le calculateur 2 envoie des paramètres de configuration 21 au module d'intelligence artificielle 11 selon l'étape de configuration 101. Les paramètres de configuration 21 comprennent des données contextuelles comportant un point d'intérêt géographique du type salle de spectacle.

Selon l'étape de traitement 102, le module d'intelligence artificielle 11 interroge un serveur 18 de la salle de spectacle afin de récupérer une information 28 sur la salle de spectacle, pour générer une requête de contenu audio personnalisé 22, en relation avec ladite information 28 sur la salle de spectacle. Par exemple, le module d'intelligence artificielle 11 interroge le serveur 18 de la salle de spectacle sur le prochain concert programmé dans ladite salle de spectacle. L'information 28 récupérée en réponse à l'interrogation du serveur 18 comprend un artiste et un titre d'album. Le module d'intelligence artificielle 11 génère une requête de contenu audio personnalisé 22 comprenant la catégorie musique ainsi que des caractéristiques associées comprenant le nom de l'artiste et le titre de l'album envoyés par le serveur 18.

Selon l'étape de génération d'un contenu audio 103, le compilateur 12 interroge un fournisseur de contenus audio musicaux 13 pour récupérer un contenu audio de catégorie musique 23, en particulier le contenu audio correspondant à la chanson se rapportant au nom de l'artiste et au titre de l'album.

Selon la première variante, un extrait du contenu audio correspondant à la chanson se rapportant au nom de l'artiste et au titre de l'album, est mixé à un autre contenu audio, par exemple au contenu audio personnalisé répondant à la requête de contenu audio personnalisé précédente, générant ainsi un contenu audio personnalisé 29 de type augmenté répondant à la dernière requête de contenu audio personnalisé 22. Selon l'étape de délivrance d'un contenu audio 104, le compilateur 12 envoie le contenu audio personnalisé 29 de type augmenté au calculateur 2 pour une diffusion au sein de la cabine 4 du véhicule 1. Le conducteur du véhicule 1, à l'écoute du contenu audio personnalisé de type augmenté, perçoit qu'il passe à proximité d'une salle de concert. Le conducteur est alors en totale immersion avec l'environnement. De surcroit, le conducteur est prévenu de la prochaine programmation de la salle de spectacle localisée à proximité du véhicule 1.

Selon la deuxième variante, le contenu audio musical 23 correspondant à la chanson se rapportant au nom de l'artiste et au titre de l'album, est directement envoyé en tant que contenu audio personnalisé 29 au calculateur 2, sans mixage avec un autre contenu audio, selon l'étape de délivrance d'un contenu audio 104.

Les premier et deuxième modes de réalisation, ainsi que les première et deuxième variantes peuvent être appliqués à d'autres données de configuration qu'une donnée contextuelle de point d'intérêt géographique, par exemple à une donnée contextuelle de météo. Lors d'une prévision de changement de météo vers un temps orageux, le compilateur 12 peut envoyer un contenu audio personnalisé 29 augmenté mixant un bruit de tonnerre avec un autre contenu audio, sur réception d'une requête de contenu audio personnalisé 22 générée à partir d'une donnée contextuelle de météo de type orage.

Selon un exemple appliqué à des données véhicule, le compilateur 12 peut envoyer un contenu audio personnalisé 29 augmenté mixant un bruit de moteur de voiture de sport avec un autre contenu audio, sur réception d'une requête de contenu audio personnalisé 22 générée à partir d'une donnée véhicule de vitesse de type rapide, le type rapide correspondant par exemple à un dépassement de vitesse du véhicule 1 par rapport à un seuil de vitesse prédéterminé.

Selon un exemple appliqué à des données passager, le compilateur 12 peut envoyer un contenu audio personnalisé 29 augmenté mixant un extrait d'une chanson dont les paroles évoquent le réveil, par exemple la chanson « Paris s'éveille » de Jacques Dutronc, avec un autre contenu audio, sur réception d'une requête de contenu audio personnalisé 22 générée à partir d'une donnée passager comprenant l'état du conducteur associé au type fatigue. Un signe de fatigue est par exemple détecté par le calculateur 2 par l'intermédiaire d'une caméra disposée dans la cabine 4 du véhicule.

Avantageusement, les paramètres de configuration 21 comprennent des données contextuelles comprenant le trafic routier.

Lorsqu'un ralentissement est détecté par le véhicule 1, des données de configuration 21 appropriées sont envoyées au module d'intelligence artificielle 11.

Avantageusement, des données contextuelles comprenant le trafic routier, le type ralenti ainsi qu'une durée probable du ralentissement sont envoyées au module d'intelligence artificielle 11.

Selon un exemple de réalisation, si la durée probable du ralentissement est supérieure à un seuil prédéfini, par exemple cinq minutes, le module d'intelligence artificielle envoie une requête de contenu personnalisé comprenant la catégorie information ou livre audio et la durée probable du ralentissement.

Si la durée probable du ralentissement est inférieure ou égale au seuil prédéfini, le module d'intelligence artificielle envoie une requête de contenu personnalisé 22 comprenant la catégorie sketch, le genre comédie et un descripteur d'indice de positivité très élevé. Cela permet de détendre l'ambiance au sein de la cabine 4 du véhicule 1 dans une situation stressante tel qu'un ralentissement de trafic routier.

Pour éviter une systémisation de la diffusion d'un contenu audio de catégorie information ou livre audio dans le cas d'une situation de ralentissement routier, le module d'intelligence artificielle 11 peut avantageusement prendre en compte un historique des requêtes de contenu personnalisé 22 déjà envoyées et adapter le contenu de la requête de contenu personnalisé 22 pour éviter une routine qui peut ennuyer le ou les passagers du véhicule 1.

Afin de donner une couleur musicale générale aux contenus audio personnalisés 29 générés par le compilateur 12, représentative ou évocatrice d'une marque, d'un produit ou d'une société, le module d'intelligence artificielle 11 comprend des paramètres identitaires 10 à une marque, un produit ou une société dont il tient compte pour générer les requêtes de contenu audio personnalisé 22.

La couleur musicale d'un contenu audio personnalisé 29 évoque de façon imagée le caractère dudit contenu audio personnalisé 29. La couleur musicale d'un contenu audio personnalisé 29 traduit les sensations ou les impressions communiqués au passager du véhicule 1 lors de la diffusion du contenu audio personnalisé 29 au sein de la cabine 4 de véhicule 1. Ainsi, la couleur musicale d'un contenu audio personnalisé 29 peut être sombre, claire, mélancolique, nostalgique, ladite couleur musicale étant évoquée par un timbre instrumental, un jeu d'interprète, un genre musical, un univers artistique.

Par exemple, dans le cas de paramètres identitaires 10 à une marque désireuse de se moderniser, le module d'intelligence artificielle 11 génère des requêtes de contenu audio personnalisés 22 comprenant la catégorie musique et des descripteurs musicaux associés relatifs à de la musique moderne jouée par des instruments électriques ou électroacoustiques.

Selon un autre exemple, dans le cas de paramètres identitaires 10 à une marque légendaire, le module d'intelligence artificielle 11 génère des requêtes de contenu audio personnalisé 22 comprenant la catégorie musique et des descripteurs musicaux associés relatifs à de la musique instrumentale jouée par des instruments acoustiques nobles tels que des instruments à cordes frottées avec un archet.

Selon un autre exemple, dans le cas de paramètres identitaires 10 à une marque automobile sportive, le module d'intelligence artificielle 11 génère des requêtes de contenu audio personnalisés 22 comprenant la catégorie musique et des descripteurs musicaux associés relatifs à de la musique récente, dynamique et de tonalité majeure.

Le module d'intelligence artificielle 11, en fonction des données de configuration 21 ou d'un historique des requêtes de contenu audio personnalisés 22 précédemment générées, prend en compte les paramètres identitaires 10 à la marque, le produit ou la société pour générer toutes requêtes de contenu audio personnalisés 22 à venir, ou seulement périodiquement, selon une séquence prédéfinie par exemple à chaque démarrage du véhicule 1 ou en fonction des données de configuration 21, telles que des préférences utilisateur.

Les paramètres identitaires 10 à une marque, un produit ou une société peuvent être modifiés par un administrateur du module d'intelligence artificielle en fonction par exemple d'une campagne publicitaire ou de l'actualité tel qu'un évènement sportif. Par défaut, les paramètres identitaires 10 sont avantageusement ceux du constructeur automobile du véhicule 1.

En fonction des paramètres identitaires 10 à une marque, un produit ou une société, le module d'intelligence artificielle 11 peut également envoyer une requête de contenu audio personnalisés 22 dont les champs permettent au compilateur 12 de récupérer auprès d'un fournisseur de contenus audio puis d'envoyer au calculateur 2, un contenu audio personnalisé 29 correspondant à un jingle de la marque, du produit ou de la société. Un jingle peut ainsi être diffusé à un passager du véhicule 1 périodiquement, à chaque début ou fin de session de conduite ou selon une séquence prédéfinie.

Un contenu audio personnalisé 29 comprend des données audio.

Le calculateur 2 est apte à analyser un contenu audio personnalisé 29 pour générer des paramètres de diffusion pour la diffusion du contenu audio personnalisé 29 au sein de la cabine 4 du véhicule 1.

Selon un exemple de réalisation, le contenu audio personnalisé 29 comprend en outre des métadonnées. Le calculateur 2 décode et analyse ces métadonnées pour générer des paramètres de diffusion, en fonction des métadonnées.

Selon un autre exemple de réalisation, le calculateur analyse directement les données audio afin d'identifier des caractéristiques telle que la catégorie du contenu audio ou des caractéristiques associées telles que le titre, l'interprète, pour générer des paramètres de diffusion, en fonction desdites caractéristiques du contenu audio.

Les paramètres de diffusion permettent de sublimer la diffusion du contenu audio personnalisé 29 dans la cabine 4 du véhicule 1 par exemple en reproduisant la signature acoustique d'un environnement tel qu'une salle de spectacle, une église, en donnant l'illusion à un passager de la cabine 4 d'être placé dans un autre espace acoustique.

Les paramètres de diffusion comprennent une correction du timbre audio aussi appelée égalisation sonore, une spatialisation sonore, une compression dynamique audio.

La correction du timbre audio permet de filtrer ou d'amplifier différentes bandes de fréquences composant un signal audio associé à une diffusion de contenu audio.

La spatialisation sonore permet de restituer un espace sonore en trois dimensions en convoluant l'empreinte acoustique mesurée d'un lieu au signal musical. La spatialisation participe à la sensation d'immersion.

La compression dynamique audio permet de diminuer l'écart de niveaux entre les sons les plus forts et les sons les plus faibles en augmentant les sons faibles tout en diminuant les sons forts.

La diffusion du contenu audio personnalisé 29 est avantageusement effectuée en fonction des paramètres de diffusion ainsi générés.

De manière préférentielle, le compilateur 12 est apte à générer une succession de contenus audio personnalisés 29 sur la base d'une requête de contenu audio personnalisé 22, à partir d'une pluralité de contenus audio 23, 24, 25, 26 générés selon une méthode de recherche des plus proches voisins, et jusqu'à réception d'une nouvelle requête de contenu audio personnalisé 22.

Avantageusement, c'est le fournisseur de contenus audio 13, 14, 15, 16 qui est apte à mettre en œuvre un algorithme de recherche des plus proches voisins, permettant la fourniture au compilateur 12 d'une pluralité de contenus audio 23, 24, 25, 26, rendant ainsi apte ledit compilateur 12 à générer une succession de contenus audio personnalisés 29.

Selon un algorithme de recherche des plus proches voisins, un fournisseur de contenus audio 13, 14, 15, 16 est apte à trouver, à partir d'un contenu audio déterminé ou de caractéristiques telles que des descripteurs, d'autres contenus audio voisins, des contenus audio voisins étant caractérisés comme ayant tous un univers musical, une thématique ou encore une couleur musicale similaire.

Avantageusement, le système 5 comprend un module d'apprentissage. Le module d'apprentissage est de préférence intégré au module d'intelligence artificielle 11. En fonction du comportement du ou des passagers, le système 5 adapte les contenus audio personnalisés 29 à diffuser au sein de la cabine 4 du véhicule 1. Le comportement du ou des passagers est détecté par une caméra intégrée au véhicule ou via une interface interface homme machine permettant à un passager de faire un retour de satisfaction sur les contenus audio personnalisés 29 diffusés au sein de la cabine 4 du véhicule 1.

Dans le cas du module d'apprentissage intégré au module d'intelligence artificielle 11, le calculateur 2 est apte à envoyer des données de satisfaction ou de comportement au module d'intelligence artificielle 11.

Le module d'intelligence artificielle 11 est apte à prendre en compte ces données de satisfaction ou de comportement pour modifier les requêtes de contenus personnalisés 22, les requêtes de contenus personnalisés 22 étant générées en fonction des données de configuration 21 et des données de satisfaction ou de comportement.

## Revendications

1. Procédé pour délivrer un contenu audio personnalisé dans une cabine (4) de véhicule (1) à un passager, le véhicule (1) comprenant un calculateur (2), le procédé comprenant les étapes suivantes :
- une étape de configuration (101), dans laquelle le calculateur (2) envoie à un module d'intelligence artificielle (11) des paramètres de configuration (21), les paramètres de configuration (21) comprenant des données véhicule, des données passager et des données contextuelles,
- une étape de traitement (102), dans laquelle le module d'intelligence artificielle (11) envoie à un compilateur (12) une requête de contenu audio personnalisé (22) sur la base d'au moins un paramètre de configuration (21), la requête de contenu audio personnalisé (22) comprenant au moins une catégorie de contenu audio,
- une étape de génération d'un contenu audio (103), dans laquelle le compilateur (12) interroge un fournisseur de contenus audio (13, 14, 15, 16) pour récupérer un contenu audio (23, 24, 25, 26) permettant de générer un contenu audio personnalisé (29) en accord avec la requête de contenu audio personnalisé (22),
- une étape de délivrance d'un contenu audio (104), dans laquelle le compilateur (12) envoie le contenu audio personnalisé (29) au calculateur (2) pour une diffusion dudit contenu audio personnalisé (29) au sein de la cabine (4) du véhicule (1).

2. Procédé selon l'une quelconque des revendications précédentes, les données contextuelles comprenant des points d'intérêt géographiques, le module d'intelligence artificielle (11) étant apte à interroger un serveur (18) d'un point d'intérêt afin de récupérer une information (28) sur le point d'intérêt, pour générer la requête de contenu audio personnalisé (22), en relation avec ladite information (28) sur le point d'intérêt.

3. Procédé selon l'une quelconque des revendications précédentes, les données contextuelles comprenant des points d'intérêt géographiques, le compilateur (12) étant apte à mixer un extrait d'un contenu audio évocateur d'un point d'intérêt, ou à mixer ledit contenu audio dans son entièreté, avec un autre contenu audio, pour générer un contenu audio dit de type augmenté, en vue de l'envoyer en tant que contenu audio personnalisé (29) au calculateur (2).

4. Procédé selon l'une quelconque des revendications précédentes, le module d'intelligence artificielle (11) comprenant des paramètres identitaires (10) à une marque, un produit ou une société, le module d'intelligence artificielle (11) étant apte à générer la requête de contenu audio personnalisé (22), en phase avec une identité de la marque, du produit ou de la société, en fonction des paramètres identitaires (10).

5. Procédé selon l'une quelconque des revendications précédentes, le procédé comprenant en outre une étape de réception de demande de diffusion spécifique (110), dans laquelle le module d'intelligence artificielle (11) reçoit une demande de diffusion d'un contenu audio spécifique (27), procédé selon lequel dans l'étape de traitement (102), le module d'intelligence artificielle (11) envoie au compilateur (12) la requête de contenu audio personnalisé (22), en fonction en outre de la demande de diffusion spécifique (27).

6. Procédé selon l'une quelconque des revendications précédentes, le compilateur (12) étant apte à interroger un ou plusieurs fournisseurs de contenus audio (13, 14, 15, 16) pour récupérer plusieurs contenus audio (23, 24, 25, 26), le compilateur étant apte à générer le contenu audio personnalisé (29) en mixant ou concaténant plusieurs contenus audio (23, 24, 25, 26).

7. Procédé selon l'une quelconque des revendications précédentes, le compilateur (12) étant apte à générer une succession de contenus audio personnalisés (29) en accord avec la requête de contenu audio personnalisé (22), à partir d'une pluralité de contenus audio (23, 24, 25, 26) générés en particulier selon une méthode de recherche des plus proches voisins, jusqu'à réception d'une nouvelle requête de contenu audio personnalisé (22).

8. Procédé selon l'une quelconque des revendications précédentes, le calculateur (2) étant apte à analyser le contenu audio personnalisé (29) pour générer des paramètres de diffusion, les paramètres de diffusion comprenant un ou plusieurs parmi en outre une correction du timbre audio, une spatialisation sonore, une compression dynamique audio, la diffusion du contenu audio personnalisé (29) au sein de la cabine (4) du véhicule (1) étant effectuée en fonction desdits paramètres de diffusion.

9. Produit programme d'ordinateur comprenant les instructions de programme mettant en œuvre les étapes du procédé de diffusion d'information personnalisée selon l'une quelconque des revendications précédentes, lorsque les instructions de programme sont exécutées par un ordinateur.

10. Support lisible d'informations sur lequel est mémorisé le produit programme d'ordinateur selon la revendication précédente.

11. Système pour délivrer un contenu audio personnalisé dans une cabine (4) de véhicule (1), à un passager comprenant :
- un véhicule (1) comprenant une cabine (4) et un calculateur (2) apte à envoyer des paramètres de configuration (21) comprenant des données véhicule, des données passager et des données contextuelles, et apte à recevoir un contenu audio personnalisé (29) pour une diffusion dudit contenu audio personnalisé (29) au sein de la cabine (4) du véhicule (1),
- un module d'intelligence artificielle (11) apte à recevoir les paramètres de configuration (21) et à envoyer une requête de contenu audio personnalisé (22) sur la base d'au moins un paramètre de configuration (21), la requête de contenu audio personnalisé (22) comprenant au moins une catégorie de contenu audio,
- un compilateur (12) apte à recevoir la requête de contenu audio personnalisé (22) et à interroger un fournisseur de contenus audio (13, 14, 15, 16) pour récupérer un contenu audio (23, 24, 25, 26) permettant de générer le contenu audio personnalisé (29) en accord avec la requête de contenu audio personnalisé (22), le compilateur (12) étant en outre apte à envoyer le contenu audio personnalisé (29) au calculateur (2).

## Patentansprüche

1. Verfahren zum Ausgeben von personalisierten Audioinhalten in einer Kabine (4) eines Fahrzeugs (1) für einen Passagier, das Fahrzeug (1) umfassend einen Rechner (2), wobei das Verfahren die folgenden Schritte umfasst:
- einen Konfigurationsschritt (101), in dem der Rechner (2) Konfigurationsparameter (21) an ein Modul für künstliche Intelligenz (11) sendet, wobei die Konfigurationsparameter (21) Fahrzeugdaten, Passagierdaten und Kontextdaten umfassen,
- einen Verarbeitungsschritt (102), in dem das Modul für künstliche Intelligenz (11) auf der Grundlage mindestens eines Konfigurationsparameters (21) eine Anfrage nach personalisiertem Audioinhalt (22) an einen Compiler (12) sendet, wobei die Anfrage nach personalisiertem Audioinhalt (22) mindestens eine Kategorie von Audioinhalt umfasst,
- einen Schritt zum Erzeugen eines Audioinhalts (103), in dem der Compiler (12) einen Anbieter von Audioinhalten (13, 14, 15, 16) abfragt, um einen Audioinhalt (23, 24, 25, 26) abzurufen, mit dem ein personalisierter Audioinhalt (29) entsprechend der Anfrage nach personalisiertem Audioinhalt (22) erzeugt werden kann,
- einen Schritt zum Ausgeben von Audioinhalt (104), bei dem der Compiler (12) den personalisierten Audioinhalt (29) an den Rechner (2) sendet, um den personalisierten Audioinhalt (29) in der Kabine (4) des Fahrzeugs (1) wiederzugeben.

2. Verfahren nach einem der vorhergehenden Ansprüche, wobei die Kontextdaten geografische Sehenswürdigkeiten umfassen, wobei das Modul für künstliche Intelligenz (11) geeignet ist, einen Server (18) eines Point of Interest abzufragen, um Informationen (28) über den Point of Interest abzurufen, um die Anfrage nach personalisiertem Audioinhalt (22) in Verbindung mit den Informationen (28) über den Point of Interest zu erzeugen.

3. Verfahren nach einem der vorhergehenden Ansprüche, wobei die Kontextdaten geografische Points of Interest umfassen, wobei der Compiler (12) geeignet ist, einen Auszug aus einem Audioinhalt, der an einen Point of Interest erinnert, oder den gesamten Audioinhalt mit einem anderen Audioinhalt zu mischen, um einen sogenannten erweiterten Audioinhalt zu erzeugen, um ihn als personalisierten Audioinhalt (29) an den Rechner (2) zu senden.

4. Verfahren nach einem der vorhergehenden Ansprüche, wobei das Modul für künstliche Intelligenz (11) Identitätsparameter (10) für eine Marke, ein Produkt oder ein Unternehmen umfasst, wobei das Modul für künstliche Intelligenz (11) geeignet ist, die Anfrage nach personalisiertem Audioinhalt (22) entsprechend einer Identität der Marke, des Produkts oder des Unternehmens in Abhängigkeit der Identitätsparameter (10) zu erzeugen.

5. Verfahren nach einem der vorhergehenden Ansprüche, wobei das Verfahren außerdem einen Schritt zum Empfangen einer Anforderung nach spezifischer Wiedergabe (110) umfasst, wobei das Modul für künstliche Intelligenz (11) eine Anforderung nach Wiedergabe eines spezifischen Audioinhalts (27) empfängt, wobei in dem Verfahren in dem Verarbeitungsschritt (102) das Modul für künstliche Intelligenz (11) die Anfrage nach personalisiertem Audioinhalt (22) ferner in Abhängigkeit der Anforderung nach spezifischer Wiedergabe (27) an den Compiler (12) sendet.

6. Verfahren nach einem der vorhergehenden Ansprüche, wobei der Compiler (12) geeignet ist, einen oder mehrere Anbieter von Audioinhalten (13, 14, 15, 16) abzufragen, um mehrere Audioinhalte (23, 24, 25, 26) abzurufen, wobei der Compiler geeignet ist, den personalisierten Audioinhalt (29) durch Mischen oder Verknüpfen mehrerer Audioinhalte (23, 24, 25, 26) zu erzeugen.

7. Verfahren nach einem der vorhergehenden Ansprüche, wobei der Compiler (12) geeignet ist, eine Abfolge personalisierter Audioinhalte (29) gemäß der Anfrage nach personalisiertem Audioinhalt (22) aus einer Vielzahl von Audioinhalten (23, 24, 25, 26) zu erzeugen, die insbesondere nach einer Methode zur Suche nach den nächsten Nachbarn erzeugt wurden, bis eine neue Anfrage nach personalisiertem Audioinhalt (22) empfangen wird.

8. Verfahren nach einem der vorhergehenden Ansprüche, wobei der Rechner (2) geeignet ist, den personalisierten Audioinhalt (29) zu analysieren, um Wiedergabeparameter zu erzeugen, wobei die Wiedergabeparameter außerdem eines oder mehrere aus einer Korrektur der Klangfarbe, einer Klangraumklangverteilung, einer dynamischen Audiokompression umfassen, wobei die Wiedergabe des personalisierten Audioinhalts (29) innerhalb der Kabine (4) des Fahrzeugs (1) in Abhängigkeit von den Wiedergabeparametern erfolgt.

9. Computerprogrammprodukt, das die Programmbefehle umfasst, die die Schritte des Verfahrens zur Wiedergabe personalisierter Informationen nach einem der vorhergehenden Ansprüche ausführen, wenn die Programmbefehle von einem Computer ausgeführt werden.

10. Lesbarer Informationsträger, auf dem das Computerprogrammprodukt nach dem vorhergehenden Anspruch gespeichert ist.

11. System zum Ausgeben eines personalisierten Audioinhalts in einer Kabine (4) eines Fahrzeugs (1) für einen Passagier, umfassend:
- ein Fahrzeug (1), umfassend eine Kabine (4) und einen Rechner (2), der geeignet ist, Konfigurationsparameter (21), umfassend Fahrzeugdaten, Passagierdaten und Kontextdaten zu senden und geeignet ist, personalisierten Audioinhalt (29) zur Wiedergabe des personalisierten Audioinhalts (29) innerhalb der Kabine (4) des Fahrzeugs (1) zu empfangen,
- ein Modul für künstliche Intelligenz (11), das geeignet ist, die Konfigurationsparameter (21) zu empfangen und auf der Grundlage mindestens eines Konfigurationsparameters (21) eine Anfrage nach personalisiertem Audioinhalt (22) zu senden, wobei die Anfrage nach personalisiertem Audioinhalt (22) mindestens eine Kategorie von Audioinhalten umfasst,
- einen Compiler (12), der geeignet ist, die Anfrage nach personalisiertem Audioinhalt (22) zu empfangen und einen Anbieter von Audioinhalten (13, 14, 15, 16) abzufragen, um einen Audioinhalt (23, 24, 25, 26) abzurufen, um den personalisierten Audioinhalt (29) in Übereinstimmung mit der Anfrage nach personalisiertem Audioinhalt (22) zu erzeugen, wobei der Compiler (12) außerdem geeignet ist, den personalisierten Audioinhalt (29) an den Rechner (2) zu senden.

## Claims

1. Method for delivering personalized audio content in a cab (4) of a vehicle (1) to a passenger, the vehicle (1) comprising a computer (2), the method comprising the following steps:
- a configuration step (101), in which the computer (2) sends configuration parameters (21) to an artificial intelligence module (11), the configuration parameters (21) comprising vehicle data, passenger data and contextual data,
- a processing step (102), in which the artificial intelligence module (11) sends to a compiler (12) a request for personalized audio content (22) on the basis of at least one configuration parameter (21), the request for personalized audio content (22) comprising at least one category of audio content,
- a step for generating audio content (103), in which the compiler (12) interrogates an audio content supplier (13, 14, 15, 16) in order to obtain audio content (23, 24, 25, 26) allowing personalized audio content (29) to be generated in accordance with the request for personalized audio content (22),
- a step for delivering audio content (104), in which the compiler (12) sends the personalized audio content (29) to the computer (2) for broadcasting said personalized audio content (29) within the cab (4) of the vehicle (1).

2. Method according to any one of the preceding claims, the contextual data comprising geographical points of interest, the artificial intelligence module (11) being capable of interrogating a server (18) of a point of interest in order to obtain information (28) on the point of interest, so as to generate the request for personalized audio content (22) relating to said information (28) on the point of interest.

3. Method according to any one of the preceding claims, the contextual data comprising geographical points of interest, the compiler (12) being capable of mixing an extract of an audio content relating to a point of interest, or of mixing said audio content, in its entirety, with another audio content, so as to generate an audio content said to be of the enhanced type, with a view to sending it as personalized audio content (29) to the computer (2).

4. Method according to any one of the preceding claims, the artificial intelligence module (11) comprising parameters (10) identifying a brand, a product or a company, the artificial intelligence module (11) being capable of generating the request for personalized audio content (22), in phase with an identity of the brand, of the product or of the company, depending on the identifying parameters (10).

5. Method according to any one of the preceding claims, the method furthermore comprising a step for receiving a specific broadcast request (110), in which the artificial intelligence module (11) receives a request for broadcasting a specific audio content (27), method according to which, in the processing step (102), the artificial intelligence module (11) sends to the compiler (12) the request for personalized audio content (22), depending furthermore on the specific broadcast request (27).

6. Method according to any one of the preceding claims, the compiler (12) being capable of interrogating one or more audio content suppliers (13, 14, 15, 16) in order to obtain several audio contents (23, 24, 25, 26), the compiler being capable of generating the personalized audio content (29) by mixing or concatenating several audio contents (23, 24, 25, 26).

7. Method according to any one of the preceding claims, the compiler (12) being capable of generating a succession of personalized audio contents (29) in accordance with the request for personalized audio content (22), starting from a plurality of audio contents (23, 24, 25, 26) generated in particular according to a nearest-neighbour search method, until it receives a new request for personalized audio content (22).

8. Method according to any one of the preceding claims, the computer (2) being capable of analyzing the personalized audio content (29) in order to generate broadcast parameters, the broadcast parameters comprising one or more from, amongst other things, a correction of the audio timbre, a sound spatialization, an audio dynamic compression, the broadcast of the personalized audio content (29) within the cab (4) of the vehicle (1) being carried out according to said broadcast parameters.

9. Computer program product comprising the programming instructions implementing the steps of the personalized information broadcast method according to any one of the preceding claims, when the programming instructions are executed by a computer.

10. Readable information medium on which the computer program product according to the preceding claim is stored.

11. System for delivering personalized audio content in a cab (4) of a vehicle (1) to a passenger comprising:
- a vehicle (1) comprising a cab (4) and a computer (2) capable of sending configuration parameters (21) comprising vehicle data, passenger data and contextual data, and capable of receiving personalized audio content (29) for broadcasting said personalized audio content (29) within the cab (4) of the vehicle (1),
- an artificial intelligence module (11) capable of receiving the configuration parameters (21) and of sending a request for personalized audio content (22) on the basis of at least one configuration parameter (21), the request for personalized audio content (22) comprising at least one category of audio content,
- a compiler (12) capable of receiving the request for personalized audio content (22) and of interrogating an audio content supplier (13, 14, 15, 16) in order to obtain audio content (23, 24, 25, 26) allowing the personalized audio content (29) to be generated in accordance with the request for personalized audio content (22), the compiler (12) being furthermore capable of sending the personalized audio content (29) to the computer (2).
